# EUROPÄISCHE PATENTSCHRIFT

(11) **EP 4 041 618 B1**
(45) Veröffentlichungstag und Bekanntmachung des Hinweises auf die Patenterteilung: **20.08.2025**
(21) Anmeldenummer: 20737201.2
(22) Anmeldetag: 10.07.2020
(51) Int. Cl.: B62D 25/00, B62D 29/00, B60R 13/08

(54) **DÄMMELEMENT**
INSULATION ELEMENT
ÉLÉMENT ISOLANT

(30) Priorität: 08.10.2019 EP 19202038
(43) Veröffentlichungstag der Anmeldung: 17.08.2022
(60) Teilanmeldung: 25189385.5
(73) Patentinhaber: Sika Technology AG, 6340 Baar (CH)
(72) Erfinder: LINDGREN, Henrik, 7181 Feluy (BE); MARCQ, Dimitri, 1480 Tubize (BE)
(74) Vertreter: Sika Patent Attorneys
(86) Internationale Anmeldenummer: PCT/EP2020/069658
(87) Internationale Veröffentlichungsnummer: WO 2021/069120

(56) Entgegenhaltungen:
- EP-A1- 3 263 425
- EP-B1- 1 975 006
- WO-A1-2019/029989
- GB-A- 2 463 858
- JP-A- 2006 001 472
- US-A1- 2015 315 782
- PREMIER TECH CHRONOS: "Robot Palletizer | Robotic Modular Palletizer (RPM Series)", 10 September 2015 (2015-09-10), pages 1, XP054980355, Retrieved from the Internet <URL:https://www.youtube.com/watch?v=jHsRjke6fhI> [retrieved on 20200401]

## Beschreibung

Die Erfindung betrifft ein Dämmelement zur Abdämmung eines Strukturelementes in einem Kraftfahrzeug. Weiterhin betrifft die Erfindung ein System mit mehreren solchen Dämmelementen, sowie ein Verfahren zur Anbringung solcher Dämmelemente an Strukturelementen.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

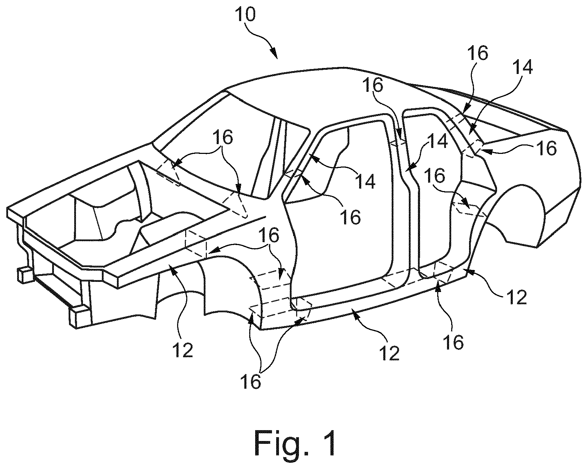

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Dämmelementen 16 abgedichtet bzw. verstärkt, wie beispielsweise in EP 3 263 425 gezeigt.

Nachteilig an den bisher bekannten Abdichtungs- und/oder Verstärkungselementen ist es, dass solche Teile oftmals nicht effizient verpackt werden können. Weiterhin kommt es bei einem Transport solcher Teile immer wieder zu Verwechslungen und Beschädigungen von einzelnen Teilen.

Es ist daher eine Aufgabe der vorliegenden Erfindung, ein verbessertes Dämmelement zur Abdämmung eines Strukturelementes in einem Kraftfahrzeug zur Verfügung zu stellen, welches die Nachteile des Standes der Technik vermeidet. Das Dämmelement soll insbesondere wirtschaftlicher verpackt und transportiert werden können.

Diese Aufgabe wird gelöst durch ein Dämmelement zur Abdämmung eines Strukturelementes in einem Kraftfahrzeug, das Dämmelement umfassend: einen Träger; und ein expandierbares Material, welches auf dem Träger angeordnet ist; wobei das Dämmelement eine Oberseite und eine Unterseite hat, welche in einem Verwendungszustand im Wesentlichen in einer Ebene eines abzudämmenden Querschnitts ausgerichtet sind, wobei das Dämmelement auf der Oberseite und auf der Unterseite jeweils zumindest drei Kontaktstellen aufweist, wobei diese Kontaktstellen derart ausgebildet sind, dass bei einer Stapelung mehrerer identischer Dämmelemente jeweils benachbarte Dämmelemente über diese Kontaktstellen aufeinander aufliegen und dadurch parallel zueinander angeordnet sind.

Diese Lösung hat zunächst den Vorteil, dass dadurch ein Dämmelement zur Verfügung gestellt wird, welches stapelbar ausgebildet ist. Dadurch können solche Dämmelemente für den Transport aufeinandergestapelt werden und im gestapelten Zustand verpackt und transportiert werden. Dies bringt einerseits Ersparnisse bei den Transportkosten, weil dadurch die Dämmelemente platzsparender verpackt werden können, so dass in einem bestimmten Volumen mehr Dämmelemente transportiert werden können, als dies mit herkömmlichen Dämmelementen der Fall war. Zudem bietet eine Stapelung solcher Dämmelemente den Vorteil, dass Verwechslungen von unterschiedlichen Dämmelementen einfacher erkannt werden können. Wenn beispielsweise ein erstes Dämmelement in einem Behälter mit mehreren zweiten Dämmelementen verpackt wird, fällt dies sofort auf, weil das erste Dämmelement in aller Regel nicht mit den zweiten Dämmelementen stapelbar ist. Dadurch können Verwechslungen stark reduziert werden.

Das hier vorgeschlagene stapelbare Dämmelement bietet weiterhin den Vorteil, dass durch die gestapelte Anordnung für Transport und Lagerung die einzelnen Dämmelemente weniger leicht beschädigt werden können. Werden nämlich wie bisher die einzelnen Dämmelemente lose in einem Behälter transportiert, so kommt es zu vielen Kontakten zwischen den Dämmelementen, wobei ab und zu eine Beschädigung auftreten kann. Werden jedoch die Dämmelemente in Stapeln transportiert, so wird eine Anzahl an mechanischen Berührungen der Dämmelemente untereinander stark reduziert. Zudem können die Dämmelemente derart ausgestaltet werden, dass die vorgesehenen Berührungsorte robust bzw. wenig anfällig auf Beschädigung ausgebildet sind, und/oder dass leichter zu beschädigende Orte der Dämmelemente an geschützten Stellen angeordnet sind, welche beispielsweise bei einer Stapelung durch die benachbarten Dämmelemente abgedeckt sind.

Weiterhin bietet das hier vorgeschlagene stapelbare Dämmelement den Vorteil, dass eine automatisierte Anbringung der Dämmelemente an Strukturelementen in Kraftfahrzeugen erleichtert wird. So können beispielsweise ganze Stapel von solchen Dämmelementen in einen Roboter geladen werden, welcher dann die einzelnen Dämmelemente von diesem Stapel entnimmt und entsprechend an die Strukturelemente anbringt. Bei lose angeordneten Dämmelementen in einem Behälter ist eine solche automatisierte Anbringung der Dämmelemente wesentlich schwieriger zu bewerkstelligen.

Die Bezeichnung "Dämmelement" umfasst im Zusammenhang mit dieser Erfindung Elemente zur Abschottung und/oder Abdämmung und/oder Verschliessung und/oder Verstärkung und/oder Dämmung eines Strukturelementes. Diese verschiedenen Eigenschaften eines solchen Dämmelementes können dabei einzeln oder aber in Kombination miteinander auftreten.

Die Bezeichnung "Oberseite" und "Unterseite" bedeutet im Zusammenhang mit dieser Erfindung jeweils die beiden Hauptoberflächen bzw. die beiden grössten Seitenflächen des Dämmelementes. Da die Dämmelemente dazu ausgelegt sind, einen Querschnitt in einem Strukturelement zu verschliessen, bedeutet dies, dass die Oberseite und die Unterseite sich jeweils im Wesentlichen in einer Ebene eines abzudämmenden Querschnitts befinden in einem Anwendungszustand. Dabei kann die Oberseite bzw. die Unterseite auch einen stufenförmigen Charakter haben, das heisst, die Oberseite bzw. die Unterseite muss nicht vollständig flach ausgebildet sein.

Die Bezeichnung "parallel" in Bezug zur Anordnung von Dämmelementen in einem Stapel mehrerer identischer Dämmelemente bedeutet im Zusammenhang dieser Erfindung, dass jeweils dieselben Flächen und/oder Kanten der identischen Dämmelemente im Wesentlichen parallel zueinander angeordnet sind.

In einer beispielhaften Ausführungsform hat das Dämmelement auf der Oberseite und auf der Unterseite jeweils genau drei Kontaktstellen, welche bei einer Stapelung von benachbarten Dämmelementen aufeinander aufliegen.

In einer alternativen Weiterbildung hat das Dämmelement auf der Oberseite und auf der Unterseite genau vier oder zumindest vier solche Kontaktstellen.

In einer weiteren alternativen Ausführungsform hat das Dämmelement auf der Oberseite und auf der Unterseite genau fünf oder zumindest fünf solche Kontaktstellen.

In einer beispielhaften Ausführungsform sind zumindest eine Kontaktstelle auf der Oberseite und eine dieser zugeordneten Kontaktstelle auf der Unterseite derart ausgebildet, dass benachbarte Dämmelemente bei einer Stapelung in vertikaler Richtung gegen eine horizontale Verschiebung gesichert sind.

In einer beispielhaften Weiterbildung sind zumindest eine Kontaktstelle auf der Oberseite und eine dieser zugeordneten Kontaktstelle auf der Unterseite derart ausgebildet, dass bei einer Stapelung eine mechanische Arretierung zwischen den entsprechenden Kontaktstellen entsteht.

In einer beispielhaften Ausführungsform ist eine Kontaktstelle auf der Oberseite als erstes Kupplungselement ausgebildet und eine dieser zugeordneten Kontaktstelle auf der Unterseite ist als zweites Kupplungselement ausgebildet, wobei bei einer Stapelung das erste Kupplungselement und das zweite Kupplungselement derart ineinandergreifen, dass dadurch eine temporäre Fixierung der benachbarten Dämmelemente entsteht.

In einer beispielhaften Ausführungsform liegt zumindest eine Kontaktstelle in einem Bereich eines Fixierungselementes.

Als "Bereich eines Fixierungselementes" wird im Zusammenhang dieser Erfindung das Fixierungselement selbst, eine Basis des Fixierungselementes, und das expandierbare Material an der Basis des Fixierungselementes verstanden, welches benötigt wird, um die Öffnung im Strukturelement, in welcher das Fixierungselement eingeführt wird, abzudämmen.

In einer beispielhaften Ausführungsform ist das Fixierungselement als Clip ausgebildet.

In einer beispielhaften Ausführungsform beträgt eine Höhe des Fixierungselementes in einer Stapelrichtung weniger als 8 mm, bevorzugt weniger als 7 mm, besonders bevorzugt weniger als 6 mm.

In einer beispielhaften Ausführungsform beträgt eine Höhe an der Basis des Fixierungselementes in Stapelrichtung, welche sowohl eine Basis des Fixierungselementes umfasst als auch das expandierbare Material an der Basis des Fixierungselementes, welches benötigt wird, um die Öffnung im Strukturelement, in welcher das Fixierungselement eingeführt wird, abzudämmen, höchstens 130% oder höchstens 120% oder höchstens 110% einer Höhe des Fixierungselementes in Stapelrichtung.

Die Ausgestaltung solcher relativer Höhen hat den Vorteil, dass dadurch die Dämmelemente platzsparender verpackt werden können.

In einer beispielhaften Ausführungsform ist zumindest eine Kontaktstelle als Distanzelement ausgebildet, wobei das Distanzelement in einem Verwendungszustand des Dämmelementes im Strukturelement zur Abstützung und/oder Positionierung des Dämmelementes am Strukturelement dient.

In einer beispielhaften Weiterbildung ist das Distanzelement an sich stapelbar ausgestaltet, wobei zwei ineinander gestapelte Distanzelemente eine Gesamthöhe in Stapelrichtung von höchstens 170% oder höchstens 160% oder höchstens 150% oder höchstens 140% oder höchstens 130% einer Höhe eines einzelnen Distanzelementes aufweisen.

In einer beispielhaften Ausführungsform bilden Stufen des Trägers einen Winkel zur Stapelrichtung von zumindest 35° oder zumindest 40° oder zumindest 45° oder zumindest 50° oder zumindest 55°.

Der Vorteil von derart gestalteten Stufen liegt darin, dass Dämmelemente mit flacheren Stufen besser gestapelt werden können, als dies mit steileren Stufen der Fall wäre. Bei steileren Stufen besteht insbesondere das Problem, dass benachbarte Dämmelemente nicht ohne horizontalen Versatz vertikal übereinander angeordnet werden können.

In einer beispielhaften Ausführungsform ist zumindest eine Kontaktstelle als Auflageelement ausgebildet, welches aus einer allgemeinen Oberfläche der Oberseite oder der Unterseite des Dämmelementes in Stapelrichtung herausragt.

In einer beispielhaften Ausführungsform sind alle oder einzelne Kontaktstellen durch den Träger ausgebildet.

In einer alternativen Ausführungsform sind alle oder einzelne Kontaktstellen durch das expandierbare Material ausgebildet.

In einer weiteren Ausführungsform ist zumindest eine Kontaktstelle durch den Träger gebildet, und zumindest eine Kontaktstelle ist durch das expandierbare Material gebildet.

Da der Träger in der Regel mit kleineren Toleranzen hergestellt werden kann als das expandierbare Material, kann es vorteilhaft sein, die Kontaktstellen möglichst durch den Träger auszubilden.

hat das Dämmelement zumindest ein Sicherungselement, welches derart ausgebildet ist, dass bei aufeinander gestapelten Dämmelementen ein Dämmelement durch das Sicherungselement eines benachbarten Dämmelementes gegen eine Verschiebung quer zur Stapelrichtung und/oder gegen eine Rotation des Dämmelementes um die Stapelrichtung gesichert ist.

In einer beispielhaften Ausführungsform ist das Sicherungselement derart ausgebildet, dass sich bei aufeinander gestapelten Dämmelementen die Sicherheitselemente zweier benachbarter Dämmelemente in Stapelrichtung überlappen.

In einer beispielhaften Weiterbildung überlappen sich die Sicherheitselemente in Stapelrichtung um zumindest 3 mm oder um zumindest 5 mm oder um zumindest 7 mm.

In einer beispielhaften Ausführungsform hat das Sicherheitselement zumindest eine Führungsfläche, welche derart ausgebildet ist, dass bei einer Stapelung die Führungsfläche ein zu stapelndes Dämmelement führt, sodass das neu gestapelte Dämmelement im Wesentlichen deckungsgleich in Stapelrichtung auf dem Dämmelement angeordnet wird.

In einer beispielhaften Ausführungsform ist zumindest ein Distanzelement als Sicherungselement ausgestaltet.

In einer beispielhaften Weiterbildung ist das Distanzelement im Wesentlichen Y-förmig ausgestaltet. Beispielsweise können dabei einzelne Flächen der Schenkel des Y-förmigen Distanzelementes als Führungsfläche ausgebildet sein.

In einer alternativen Weiterbildung ist das Distanzelement im Wesentlichen U-förmig oder V-förmig. Wiederum können dabei einzelne Flächen der Schenkel des U-förmigen oder V-förmigen Distanzelementes als Führungsfläche ausgebildet sein.

In einer beispielhaften Ausführungsform ist zumindest eine Stufe als Sicherungselement ausgestaltet.

In einer beispielhaften Ausführungsform ist zumindest ein Bereich eines Fixierungselementes als Sicherungselement ausgestaltet.

In einer beispielhaften Weiterbildung ist eine Basis des Fixierungselementes als Sicherungselement ausgestaltet. Dabei kann diese Basis beispielsweise im Wesentlichen U-förmig ausgebildet sein. Wiederum können dabei einzelne Flächen der Schenkel der U-förmigen Basis des Fixierungselementes als Führungsfläche ausgebildet sein.

In einer beispielhaften Ausführungsform sind alle oder einzelne Sicherungselemente durch den Träger ausgebildet.

In einer alternativen Ausführungsform sind alle oder einzelne Sicherungselemente durch das expandierbare Material ausgebildet.

In einer weiteren Ausführungsform ist zumindest ein Sicherungselement durch den Träger gebildet, und zumindest ein Sicherungselement ist durch das expandierbare Material gebildet.

Da der Träger in der Regel mit kleineren Toleranzen hergestellt werden kann als das expandierbare Material, kann es vorteilhaft sein, die Sicherungselemente möglichst durch den Träger auszubilden.

Als expandierbares Material können grundsätzlich verschiedene Materialien eingesetzt werden, welche zur Schäumung gebracht werden können. Das Material kann dabei Verstärkungseigenschaften aufweisen oder auch nicht. Typischerweise wird das expandierbare Material thermisch, durch Feuchtigkeit oder durch elektromagnetische Strahlung zur Expansion gebracht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 250°C, insbesondere von 100°C bis 250°C, bevorzugt von 120°C bis 240°C, bevorzugt von 130°C bis 230°C schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschrieben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben. Solche expandierbaren Materialien sind für die vorliegende Erfindung besonders bevorzugt.

Als expandierbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470.

In einer beispielhaften Ausführungsform hat das expandierbare Material eine Expansionsrate von 800% bis 5000%, bevorzugt von 1000% bis 4000%, besonders bevorzugt von 1500% bis 3000%.Expandierbare Materialien mit solchen Expansionsraten bieten den Vorteil, dass dadurch eine zuverlässige Abdichtung bzw. Abdämmung des Strukturelementes gegen Flüssigkeiten und Schall erreicht werden kann.

In einer beispielhaften Ausführungsform ist das expandierbare Material als temperaturinduziertes Material ausgebildet.

Dies hat den Vorteil, dass dadurch der Ofen zur Einbrennung der Tauchlackierungsflüssigkeit benutzt werden kann, um das expandierbare Material zu expandieren und um dadurch den Hohlraum abzudämmen. Somit ist kein zusätzlicher Arbeitsschritt notwendig.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann der Träger beispielsweise massiv, hohl, oder geschäumt sein oder eine gitterartige Struktur aufweisen. Die Oberfläche des Trägers kann typischerweise glatt, rau oder strukturiert sein.

Bei Dämmelementen, bei welchen sich das expandierbare Material auf einem Träger befindet, unterscheidet sich das Herstellungsverfahren dementsprechend, ob der Träger aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall der Träger, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht der Träger aus einem Material, welches sich nicht durch das Spritzgussverfahren herstellen lässt, also beispielsweise aus einem Metall, wird der Träger in ein entsprechendes Werkzeug gelegt und das expandierbare Material wird an den Träger angespritzt. Selbstverständlich besteht auch die Möglichkeit das expandierbare Material durch spezielle Befestigungsmittel oder -verfahren an dem Träger zu befestigen.

Weiterhin können Träger auch durch andere Verfahren hergestellt werden, beispielsweise durch Extrusion.

Das Dämmelement hat eine Stapelhöhe, welche einer zusätzlichen Höhe in Stapelrichtung eines Stapels mit Dämmelementen entspricht, um welche der Stapel wächst, wenn ein weiteres Dämmelement auf den Stapel gestapelt wird.

In einer beispielhaften Ausführungsform beträgt eine Stapelhöhe des Dämmelementes höchstens 80%, bevorzugt höchstens 70%, bevorzugt höchstens 60%, bevorzugt höchstens 50%, bevorzugt höchstens 40%, bevorzugt höchstens 30%, einer Gesamthöhe eines einzelnen Dämmelementes in Stapelrichtung.

Dies hat den Vorteil, dass dadurch die Dämmelemente platzsparender in einem Stapel angeordnet werden können. Durch eine stärkere vertikale Verschachtelung benachbarter Dämmelemente in einem Stapel wird zudem eine verbesserte Stabilität eines Gesamtstapels erreicht.

Die eingangs gestellte Aufgabe wird zudem gelöst durch ein System mit mehreren solchen Dämmelementen, wobei die Dämmelemente aufeinandergestapelt sind.

In einer beispielhaften Ausführungsform umfasst das System zumindest 10 oder zumindest 15 oder zumindest 20 oder zumindest 25 oder zumindest 30 gestapelte Dämmelemente.

In einer weiteren beispielhaften Ausführungsform umfasst das System höchstens 150 oder höchstens 120 oder höchstens 100 oder höchstens 80 oder höchstens 60 gestapelte Dämmelemente.

In einer beispielhaften Ausführungsform liegt ein unterstes Dämmelement des Stapels auf einem Grundelement auf.

Das Vorsehen eines solchen Grundelementes hat den Vorteil, dass dadurch ein Stapel von Dämmelementen auf eine Fläche gestellt werden kann. Zudem können solche Grundelemente für einen automatisierten Prozess verwendet werden.

In einer beispielhaften Ausführungsform erhöht jeweils ein zusätzliches Dämmelement den Stapel um höchstens 20 mm, besonders bevorzugt um höchstens 18 mm, besonders bevorzugt um höchstens 16 mm, besonders bevorzugt um höchstens 14 mm, besonders bevorzugt um höchstens 12 mm, besonders bevorzugt um höchstens 10 mm.

Das enge Stapeln von Dämmelementen hat den Vorteil, dass dadurch die Dämmelemente effizienter verpackt werden können.

In einer beispielhaften Ausführungsform beträgt eine Stapelhöhe eines einzelnen Dämmelementes höchstens 80%, bevorzugt höchstens 70%, bevorzugt höchstens 60%, bevorzugt höchstens 50%, bevorzugt höchstens 40%, bevorzugt höchstens 30%, einer Gesamthöhe eines einzelnen Dämmelementes in Stapelrichtung.

Das enge Stapeln von Dämmelementen hat wiederum den Vorteil, dass dadurch die Dämmelemente effizienter verpackt werden können.

Die eingangs gestellte Aufgabe wird zudem gelöst durch ein Verfahren zur Anbringung von Dämmelementen an Strukturelementen in Kraftfahrzeugen, das Verfahren umfassend die Schritte: Bereitstellen eines Systems mit gestapelten Dämmelementen gemäss obiger Beschreibung; Laden des Systems in einen Applikationsroboter; Entnehmen eines einzelnen Dämmelementes aus dem System; Transportieren des einzelnen Dämmelementes durch einen Roboterarm; und Anbringen des Dämmelementes am Strukturelement des Kraftfahrzeugs.

In einer beispielhaften Ausführungsform wird der Applikationsroboter mit mehreren Systemen gleichzeitig beladen.

In einer beispielhaften Ausführungsform wird das Entnehmen der einzelnen Dämmelemente durch den Roboterarm durchgeführt.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2a bis 2c: eine schematische Darstellung eines beispielhaften Dämmelementes bzw. ein System mit mehreren solchen Dämmelementen;
- Fig. 3: eine schematische Darstellung einer beispielhaften temporären Fixierung zwischen zwei benachbarten Dämmelementen; und
- Fig. 4: eine schematische Darstellung eines beispielhaften Systems mit mehreren gestapelten Dämmelementen.

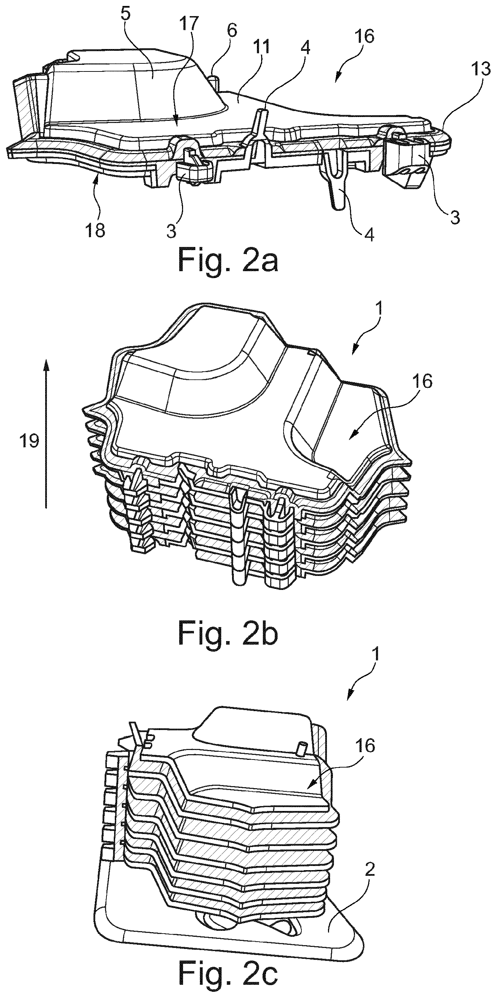

In Fig. 2a ist zunächst ein einzelnes Dämmelement 16 dargestellt. Dieses Dämmelement 16 hat einen Träger 11 und ein auf diesem Träger 11 angeordnetes expandierbares Material 13. Das Dämmelement 16 ist im Wesentlichen flächenförmig ausgebildet, um in einem Verwendungszustand einen Querschnitt eines Strukturelementes effizient abdämmen zu können. Dabei ist das Dämmelement 16 jedoch nicht vollständig flach ausgebildet, sondern es hat verschiedene Erhebungen und stufenförmige Absätze, insbesondere eine steile Stufe 5.

Das Dämmelement 16 hat dabei eine Oberseite 17 und eine Unterseite 18. Zudem hat das Dämmelement 16 in diesem Ausführungsbeispiel zwei Fixierungselemente 3, welche jeweils als Clip ausgebildet sind, sowie zwei Distanzelemente 4, welche jeweils auf unterschiedliche Seiten ausgerichtet sind.

Zudem hat das Dämmelement 16 ein Auflageelement 6, welches in diesem Ausführungsbeispiel auf der Oberseite 17 des Dämmelementes 16 angeordnet ist.

In diesem Ausführungsbeispiel hat das Dämmelement 16 drei Kontaktstellen, welche auf der Oberseite 17 angeordnet sind, und jeweils drei dazu zugeordnete Kontaktstellen auf der Unterseite 18. Dabei sind jeweils zwei Kontaktstellen in den Bereichen der Fixierungselemente 3 angeordnet, und eine weitere Kontaktstelle ist als Auflageelement 6 bzw. als Auflagepunkt auf der Unterseite 18 des Dämmelementes 16 ausgebildet.

In Fig. 2b ist nun ein System 1 mit mehreren Dämmelementen 16 gemäss Fig. 2a dargestellt. Die Dämmelemente 16 sind dabei in einer Stapelrichtung 19 aufeinandergestapelt. Dabei sind die gestapelten Dämmelemente 16 parallel zueinander angeordnet und liegen jeweils auf den Kontaktstellen auf deren Oberseite und Unterseite aufeinander auf.

In Fig. 2c ist wiederum ein Stapel bzw. ein System 1 mit gestapelten Dämmelementen 16 dargestellt, wobei in diesem Ausführungsbeispiel das unterste Dämmelement 16 des Stapels auf einem Grundelement 2 fixiert ist.

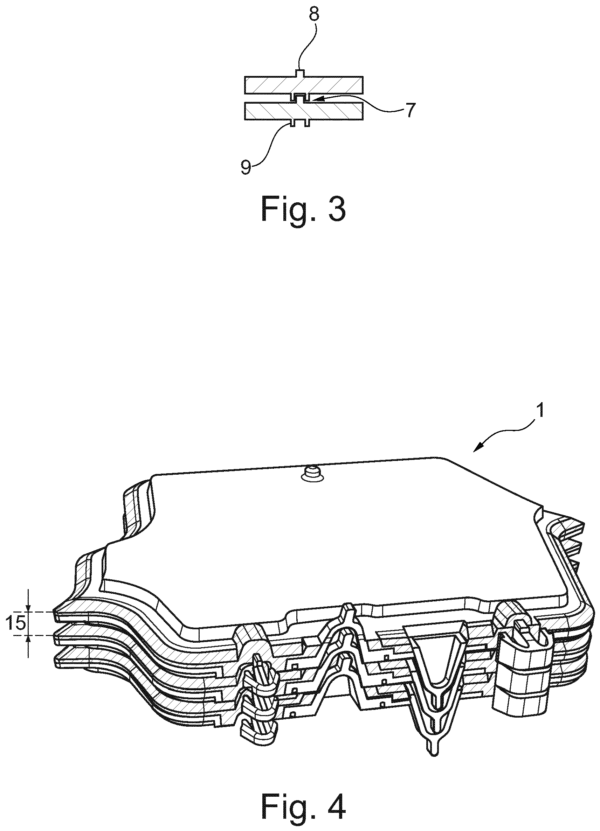

In Fig. 3 ist eine beispielhafte mechanische Arretierung 7 zwischen zwei benachbarten Dämmelementen schematisch dargestellt. Dabei greift ein erstes Kopplungselement 8 eines unteren Dämmelementes in ein zweites Kopplungselement 9 eines oberen Dämmelementes. Dadurch können beispielsweise die gestapelten Dämmelemente gegen eine horizontale Verschiebung, und teilweise auch gegen Verschiebungen in andere Richtungen, gesichert werden.

In Fig. 4 ist ein weiteres beispielhaftes System 1 mit gestapelten Dämmelementen 16 dargestellt. In dieser Darstellung ist ersichtlich, dass jeweils ein zusätzliches Dämmelement 16 den Stapel um jeweils eine Stapelhöhe 15 eines Dämmelementes 16 erhöht.

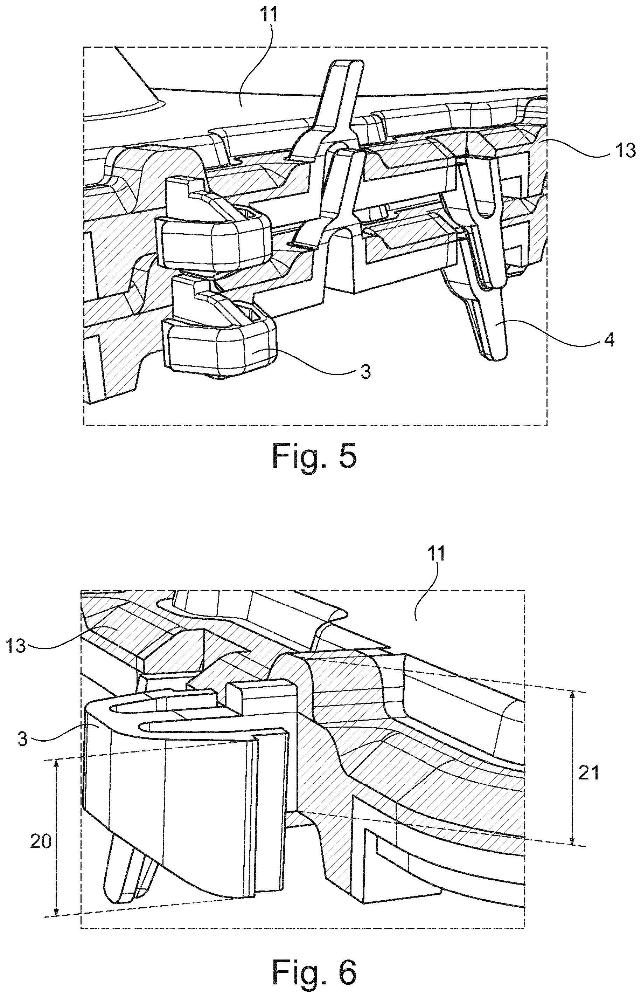

In Fig. 5 ist ein Ausschnitt aus zwei gestapelten beispielhaften Dämmelementen dargestellt. In dieser Ausführungsform bildet ein Bereich des Fixierungselementes 3, namentlich das expandierbare Material 13, welches um eine Basis des Fixierungselementes 3 angeordnet ist, eine Kontaktstelle. Die übereinander angeordneten Fixierungselemente 3 berühren sich dabei nicht.

Weiterhin zeigt dieser Ausschnitt zwei Distanzelemente 4 pro Dämmelement 16. Die Distanzelemente 4 sind in diesem Ausführungsbeispiel jeweils als Sicherungselement ausgebildet, da sie eine Verschiebung des Dämmelementes quer zur Stapelrichtung und eine Rotation des Dämmelementes um die Stapelrichtung verhindern. Die Distanzelemente 4 haben eine im Wesentlichen Y-förmige Gestalt, wobei die Schenkel jeweils Führungsflächen als Positionierungshilfe bei der Stapelung bilden. Zudem überlappen sich die Distanzelemente 4 benachbarter Dämmelemente in Stapelrichtung.

In Fig. 6 ist schliesslich ein Ausschnitt aus einem beispielhaften Dämmelement 16 dargestellt. Dabei ist insbesondere ein Bereich eines Fixierungselementes 3 erkennbar. Der Bereich des Fixierungselementes 3 umfasst sowohl das Fixierungselement 3 selbst, welches als Clip ausgebildet ist, als auch eine Basis des Fixierungselementes 3 und expandierbares Material 13, welches an der Basis des Fixierungselementes 3 angeordnet ist und welches benötigt wird, um eine Öffnung im Strukturelement, in welcher das Fixierungselement 3 eingeführt werden kann, abzudämmen.

In diesem Ausführungsbeispiel ist eine Höhe 21 an der Basis des Fixierungselementes 3 gekennzeichnet. Diese Höhe 21 an der Basis umfasst sowohl eine Basis des Fixierungselementes als auch das expandierbare Material an der Basis des Fixierungselementes, welches benötigt wird, um die Öffnung im Strukturelement, in welcher das Fixierungselement eingeführt wird, abzudämmen.

Weiterhin ist eine Höhe 20 des Fixierungselementes 3 selbst gekennzeichnet.

### Bezugszeichenliste

- 1: System
- 2: Grundelement
- 3: Fixierungselement
- 4: Distanzelement
- 5: Stufe
- 6: Auflageelement
- 7: mechanische Arretierung
- 8: erstes Kopplungselement
- 9: zweites Kopplungselement
- 10: Karosserie
- 11: Träger
- 12: Strukturelement
- 13: expandierbares Material
- 14: Strukturelement
- 15: Stapelhöhe eines Dämmelementes
- 16: Dämmelement
- 17: Oberseite
- 18: Unterseite
- 19: Stapelrichtung
- 20: Höhe des Fixierungselementes
- 21: Höhe der Basis des Fixierungselementes

## Patentansprüche

1. Dämmelement (16) zur Abdämmung eines Strukturelementes (12, 14) in einem Kraftfahrzeug, das Dämmelement (16) umfassend:
einen Träger (11); und
ein expandierbares Material (13), welches auf dem Träger (11) angeordnet ist;
wobei das Dämmelement (16) eine Oberseite (17) und eine Unterseite (18) hat, welche in einem Verwendungszustand im Wesentlichen in einer Ebene eines abzudämmenden Querschnittes des Strukturelementes (12, 14) ausgerichtet sind, wobei das Dämmelement (16) auf der Oberseite (17) und auf der Unterseite (18) jeweils zumindest drei Kontaktstellen aufweist, wobei diese Kontaktstellen derart ausgebildet sind, dass bei einer Stapelung mehrerer identischer Dämmelemente (16) jeweils benachbarte Dämmelemente (16) über diese Kontaktstellen aufeinander aufliegen und dadurch parallel zueinander angeordnet sind,
**dadurch gekennzeichnet, dass**
das Dämmelement (16) zumindest ein Sicherungselement hat, welches derart ausgebildet ist, dass bei aufeinander gestapelten Dämmelementen (16) ein Dämmelement (16) durch das Sicherungselement eines benachbarten Dämmelementes (16) gegen eine Verschiebung quer zur Stapelrichtung (19) und/oder gegen eine Rotation des Dämmelementes (16) um die Stapelrichtung (19) gesichert ist.

2. Dämmelement (16) nach Anspruch 1, wobei zumindest ein Distanzelement (4) und/oder zumindest eine Stufe (5) und/oder zumindest ein Bereich eines Fixierungselementes (3) als Sicherungselement ausgestaltet ist.

3. Dämmelement (16) nach einem der vorhergehenden Ansprüche, wobei zumindest eine Kontaktstelle in einem Bereich eines Fixierungselementes (3) liegt

4. Dämmelement (16) nach einem der Ansprüche 2 oder 3, wobei eine Höhe (21) an der Basis des Fixierungselementes (3) in Stapelrichtung (19), welche sowohl eine Basis des Fixierungselementes (3) umfasst als auch expandierbares Material (13) an der Basis des Fixierungselementes (3), welches benötigt wird, um eine Öffnung im Strukturelement (12, 14), in welcher das Fixierungselement (3) eingeführt werden kann, abzudämmen, höchstens 130% einer Höhe (20) des Fixierungselementes (3) in Stapelrichtung (19) beträgt.

5. Dämmelement (16) nach einem der Ansprüche 1 oder 2, wobei zumindest ein Sicherungselement als Distanzelement (4) ausgebildet ist, wobei das Distanzelement (4) in einem Verwendungszustand des Dämmelementes (16) im Strukturelement (12, 14) zur Abstützung des Dämmelementes (16) am Strukturelement (12, 14) dient.

6. Dämmelement (16) nach Anspruch 5, wobei das Distanzelement (4) an sich stapelbar ausgestaltet ist, wobei zwei ineinandergestapelte Distanzelemente (4) eine Gesamthöhe in Stapelrichtung (19) von höchstens 170% eines einzelnen Distanzelementes (4) aufweisen.

7. Dämmelement (16) nach einem der vorhergehenden Ansprüche, wobei Stufen (5) des Dämmelementes (16) einen Winkel zur Stapelrichtung (19) von zumindest 35° bilden.

8. Dämmelement (16) nach einem der vorhergehenden Ansprüche, wobei zumindest eine Kontaktstelle als Auflageelement (6) ausgebildet ist, welches aus einer allgemeinen Oberfläche der Oberseite (17) oder der Unterseite (18) des Dämmelementes (16) in Stapelrichtung (19) herausragt.

9. System (1) mit mehreren Dämmelementen (16) nach einem der Ansprüche 1 bis 8, wobei die Dämmelemente (16) aufeinandergestapelt sind.

10. System (1) nach Anspruch 9, wobei das System (1) zumindest 10 gestapelte Dämmelemente (16) umfasst, und/oder wobei ein unterstes Dämmelement (16) des Systems (1) auf einem Grundelement (2) aufliegt.

11. System (1) nach einem der Ansprüche 9 oder 10, wobei jeweils ein zusätzliches Dämmelement (16) den Stapel in Stapelrichtung (19) um höchstens 20 mm erhöht.

12. System (1) nach einem der Ansprüche 9 bis 11, wobei eine Stapelhöhe (15) eines einzelnen Dämmelementes (16) höchstens 50% einer Gesamthöhe eines einzelnen Dämmelementes (16) in Stapelrichtung (19) beträgt.

13. Verfahren zur Anbringung von Dämmelementen (16) an Strukturelementen (12, 14) in Kraftfahrzeugen, das Verfahren umfassend die Schritte:
Bereitstellen eines Systems (1) mit gestapelten Dämmelementen (16) nach einem der Ansprüche 9 bis 12;
Laden des Systems (1) in einen Applikationsroboter;
Entnehmen eines einzelnen Dämmelementes (16) aus dem System (1);
Transportieren des einzelnen Dämmelementes (16) durch einen Roboterarm; und
Anbringen des Dämmelementes (16) am Strukturelement (12, 14) des Kraftfahrzeugs.

14. Verfahren nach Anspruch 13, wobei der Applikationsroboter mit mehreren Systemen (1) gleichzeitig beladen wird und/oder wobei das Entnehmen der einzelnen Dämmelemente (16) durch den Roboterarm durchgeführt wird.

## Claims

1. Insulating element (16) for sealing off a structural element (12, 14) in a motor vehicle, the insulating element (16) comprising:
a carrier (11); and
an expandable material (13) that is arranged on the carrier (11);
wherein the insulating element (16) has a top side (17) and a bottom side (18) which, in a state of use, are substantially aligned in a plane of a cross section of the structural element (12, 14) that is to be sealed off, wherein the insulating element (16) has at least three contact points on each of the top side (17) and the bottom side (18), wherein these contact points are designed in such a way that, when a plurality of identical insulating elements (16) are stacked, adjacent insulating elements (16) respectively lie on one another via these contact points and are thus arranged parallel to one another,
**characterized in that**
the insulating element (16) has at least one securing element which is formed in such a way that, when the insulating elements (16) are stacked on top of one another, an insulating element (16) is secured by the securing element of an adjacent insulating element (16) against displacement transversely to the stacking direction (19) and/or against rotation of the insulating element (16) about the stacking direction (19).

2. Insulating element (16) according to Claim 1, wherein at least one spacer element (4) and/or at least one step (5) and/or at least one region of a fixing element (3) is configured as a securing element.

3. Insulating element (16) according to one of the preceding claims, wherein at least one contact point lies in a region of a fixing element (3).

4. Insulating element (16) according to claims 2 or 3, wherein a height (21) at the base of the fixing element (3) in the stacking direction (19) that includes both a base of the fixing element (3) and expandable material (13) at the base of the fixing element (3) that is required to seal off an opening in the structural element (12, 14) in which the fixing element (3) can be inserted is at most 130% of a height (20) of the fixing element (3) in the stacking direction (19).

5. Insulating element (16) according to either of Claims 1 and 2, wherein at least one securing element is in the form of a spacer element (4), wherein the spacer element (4) serves to support the insulating element (16) on the structural element (12, 14) in a state of use of the insulating element (16) in the structural element (12, 14).

6. Insulating element (16) according to Claim 5, wherein the spacer element (4) is configured to be stackable per se, wherein two spacer elements (4) stacked one inside the other have a total height in the stacking direction (19) of at most 170% of an individual spacer element (4).

7. Insulating element (16) according to one of the preceding claims, wherein steps (5) of the insulating element (16) form an angle to the stacking direction (19) of at least 35°.

8. Insulating element (16) according to one of the preceding claims, wherein at least one contact point is in the form of a support element (6) which protrudes from a general surface of the top side (17) or the bottom side (18) of the insulating element (16) in the stacking direction (19).

9. System (1) having a plurality of insulating elements (16) according to one of Claims 1 to 8, wherein the insulating elements (16) are stacked on top of one another.

10. System (1) according to Claim 9, wherein the system (1) comprises at least 10 stacked insulating elements (16), and/or wherein a lowermost insulating element (16) of the system (1) lies on a base element (2).

11. System (1) according to either of Claims 9 and 10, wherein each additional insulating element (16) increases the height of the stack in the stacking direction (19) by at most 20 mm.

12. System (1) according to one of Claims 9 to 11, wherein a stack height (15) of an individual insulating element (16) is at most 50% of a total height of an individual insulating element (16) in the stacking direction (19).

13. Method for attaching insulating elements (16) to structural elements (12, 14) in motor vehicles, the method comprising the steps of:
providing a system (1) having stacked insulating elements (16) according to one of Claims 9 to 12;
loading the system (1) into an application robot;
removing an individual insulating element (16) from the system (1);
transporting the individual insulating element (16) by way of a robot arm; and
attaching the insulating element (16) to the structural element (12, 14) of the motor vehicle.

14. Method according to Claim 13, wherein the application robot is loaded with a plurality of systems (1) at the same time and/or wherein the individual insulating elements (16) are removed by the robot arm.

## Revendications

1. Élément d'isolation (16) pour isoler un élément structurel (12, 14) dans un véhicule automobile, l'élément d'isolation (16) comprenant :
un support (11) ; et
un matériau expansible (13), qui est agencé sur le support (11) ;
l'élément d'isolation (16) ayant un côté supérieur (17) et un côté inférieur (18) qui, dans un état d'utilisation, sont orientés essentiellement dans un plan d'une section transversale de l'élément structurel (12, 14) à isoler,
l'élément d'isolation (16) présentant sur le côté supérieur (17) et sur le côté inférieur (18) respectivement au moins trois points de contact, ces points de contact étant réalisés de telle sorte que, lors d'un empilement de plusieurs éléments d'isolation (16) identiques, des éléments d'isolation (16) respectivement voisins reposent les uns sur les autres par l'intermédiaire de ces points de contact et sont ainsi agencés parallèlement les uns aux autres,
**caractérisé en ce que**
l'élément d'isolation (16) a au moins un élément de sécurité qui est réalisé de telle sorte que, lorsque des éléments d'isolation (16) sont empilés les uns sur les autres, un élément d'isolation (16) est bloqué par l'élément de sécurité d'un élément d'isolation (16) voisin contre un déplacement transversalement à la direction d'empilement (19) et/ou contre une rotation de l'élément d'isolation (16) autour de la direction d'empilement (19).

2. Élément d'isolation (16) selon la revendication 1, au moins un élément d'écartement (4) et/ou au moins un gradin (5) et/ou au moins une zone d'un élément de fixation (3) étant configuré sous forme d'élément de sécurité.

3. Élément d'isolation (16) selon l'une quelconque des revendications précédentes, au moins un point de contact étant situé dans une zone d'un élément de fixation (3).

4. Élément d'isolation (16) selon l'une quelconque des revendications 2 ou 3, une hauteur (21) à la base de l'élément de fixation (3) dans la direction d'empilement (19), qui comprend à la fois une base de l'élément de fixation (3) et un matériau expansible (13) à la base de l'élément de fixation (3), qui est nécessaire pour isoler une ouverture dans l'élément structurel (12, 14) dans laquelle l'élément de fixation (3) peut être inséré, étant au plus de 130 % d'une hauteur (20) de l'élément de fixation (3) dans la direction d'empilement (19).

5. Élément d'isolation (16) selon l'une quelconque des revendications 1 ou 2, au moins un élément de sécurité étant réalisé sous forme d'élément d'écartement (4), l'élément d'écartement (4) servant, dans un état d'utilisation de l'élément d'isolation (16) dans l'élément structurel (12, 14), à soutenir l'élément d'isolation (16) sur l'élément structurel (12, 14).

6. Élément d'isolation (16) selon la revendication 5, l'élément d'écartement (4) étant conçu en soi sous forme empilable, deux éléments d'écartement (4) empilés l'un dans l'autre présentant une hauteur totale dans la direction d'empilement (19) d'au plus 170 % d'un élément d'écartement (4) individuel.

7. Élément d'isolation (16) selon l'une quelconque des revendications précédentes, des gradins (5) de l'élément d'isolation (16) formant un angle par rapport à la direction d'empilement (19) d'au moins 35°.

8. Élément d'isolation (16) selon l'une quelconque des revendications précédentes, au moins un point de contact étant réalisé sous forme d'élément d'appui (6) qui fait saillie d'une surface générale du côté supérieur (17) ou du côté inférieur (18) de l'élément d'isolation (16) dans la direction d'empilement (19).

9. Système (1) avec plusieurs éléments d'isolation (16) selon l'une quelconque des revendications 1 à 8, les éléments d'isolation (16) étant empilés les uns sur les autres.

10. Système (1) selon la revendication 9, le système (1) comprenant au moins 10 éléments d'isolation (16) empilés, et/ou un élément d'isolation (16) le plus bas du système (1) reposant sur un élément de base (2).

11. Système (1) selon l'une quelconque des revendications 9 ou 10, chaque élément d'isolation supplémentaire (16) augmentant la pile dans la direction d'empilement (19) d'au plus 20 mm.

12. Système (1) selon l'une quelconque des revendications 9 à 11, une hauteur d'empilement (15) d'un élément d'isolation individuel (16) étant au plus égale à 50 % d'une hauteur totale d'un élément d'isolation individuel (16) dans la direction d'empilement (19).

13. Procédé de montage d'éléments d'isolation (16) sur des éléments structurels (12, 14) dans des véhicules automobiles, le procédé comprenant les étapes suivantes :
la fourniture d'un système (1) avec des éléments d'isolation empilés (16) selon l'une quelconque des revendications 9 à 12 ;
le chargement du système (1) dans un robot d'application ;
le prélèvement d'un élément d'isolation (16) individuel du système (1) ;
le transport de l'élément d'isolation individuel (16) par un bras de robot ; et
le montage de l'élément d'isolation (16) sur l'élément structurel (12, 14) du véhicule automobile.

14. Procédé selon la revendication 13, le robot d'application étant chargé simultanément avec plusieurs systèmes (1) et/ou le prélèvement des éléments d'isolation (16) individuels étant effectué par le bras de robot.
